# EUROPÄISCHE PATENTANMELDUNG

(11) **EP 0 995 948 A2**
(43) Veröffentlichungstag der Anmeldung: **26.04.2000**
(21) Anmeldenummer: 99810921.9
(22) Anmeldetag: 11.10.1999
(51) Int. Cl.: F22B 1/18, F01K 23/10

(54) **Verfahren zum Anfahren eines Dampfsystems und Dampfsystem zur Durchführung des Verfahrens**

(30) Priorität: 22.10.1998 DE 19848748
(71) Anmelder: Asea Brown Boveri AG, 5401 Baden (CH)
(72) Erfinder: Liebig, Erhard, Dr., 79725 Laufenburg (DE)
(74) Vertreter: Pöpper, Evamaria

(57) **Zusammenfassung**

Ein Trommel-Abhitzekessel (2) bildet zusammen mit dem Speisewasserbehälter/Entgaser (6) und Kondensator/Hotwell (4) das Dampfsystem eines Kombikraftwerkes. Dieses Dampfsystem weist mehrere, bei unterschiedlichen Druckstufen arbeitende Behälter (10, 16, 22, 6, 4) auf. Ein Teil der Behälter wird durch die Dampftrommeln (10, 16, 22) gebildet. Der Behälter der niedrigsten Druckstufe ist der Kondensator/Hotwell (4). Die Hochdruckdampftrommel (10) ist über eine Wasserleitung (25) und eine Dampfleitung (39) unmittelbar mit der Mitteldruckdampftrommel (16) verbunden. Die Mitteldruckdampftrommel (16) ist über eine Wasserleitung (27) und eine Dampfleitung (41) unmittelbar mit der Niederdruckdampftrommel (22) verbunden, und diese ist über eine Wasserleitung (29) und eine Dampfleitung (43) unmittelbar mit dem Speisewasserbehälter/Entgaser (6) verbunden. Beim Anfahren wird das Wasser/der Dampf kaskadenförmig von den Behältern einer jeweiligen höheren Druckstufe zu Behältern einer jeweiligen niedrigeren Druckstufe zirkuliert, ohne Betrieb eines Bypass-Systems (31,32,33) und Wärmeabfuhr im Kondensator/Hotwell (4). Damit bleibt die Wärme vollständig im Wasser-/Dampfkreislauf, was ein sehr schnelles Anfahren des Kraftwerkes erlaubt.

## Beschreibung

### Technisches Gebiet

Die Erfindung betrifft ein Verfahren zum Anfahren eines Dampfsystems mit mehreren unterschiedlichen Druckstufen, wobei bei jeder Druckstufe mindestens ein Behältnis zur Aufnahme eines in der Anlage umlaufenden Mediums angeordnet ist.

Sie betrifft weiter einen Trommel-Abhitzekessel und ein einen Trommel-Abhitzekessel enthaltendes Dampfsystem zur Durchführung des Verfahrens sowie ein Kombikraftwerk mit einem solchen Dampfsystem.

### Stand der Technik

Beim Kaltstart eines thermischen Kraftwerkes mit einer Dampfturbine und beispielsweise einem Trommel-Abhitzekessel mit mehreren unterschiedlichen Druckstufen wird der in den einzelnen Druckstufen erzeugte Dampf jeweils über einen Bypass bei in Betrieb befindlichem Kühlsystem über den der Dampfturbine zugeordneten von Kühlwasser durchströmten Kondensator solange abgeleitet, bis der erzeugte Dampf den Anforderungen der Dampfturbine entspricht und die weiteren Bedingungen für ein Anfahren der Dampfturbine erfüllt sind. Damit wird jedoch eine im Abhitzekessel auf den Dampf übertragene Wärmemenge über den Kondensator bzw. sein Kühlsystem an die Umgebung abgeführt. Somit ist der Bypassbetrieb verlustbehaftet. Zudem bleiben die Heizflächen insbesondere am abgasseitigen Kesselende, während einer längeren Zeitspanne kalt.

### Darstellung der Erfindung

Der Erfindung liegt die Aufgabe zugrunde, ein Verfahren der eingangs genannten Art zu schaffen, bei welchem bei Anfahrvorgängen insbesondere Kaltstarts die Wärme im Bereich des Dampfsystems und insbesondere im Bereich des Kessels gehalten werden kann und diese Wärme für eine Aufwärmung der Heizflächen, entsprechend dem Temperaturprofil über das gesamte Dampfsystem einschliesslich des Abhitzekessels genutzt wird.

Erfindungsgemäss wird dies dadurch erreicht, dass aus einem jeweiligen Behältnis einer höheren Druckstufe das Medium als Wärmeträger zu einem jeweiligen Behältnis einer niedrigeren Druckstufe zum Beheizen derselben und dessen Inhalts überführt wird.

Ein Trommel-Abhitzekessel zur Durchführung des Verfahrens zeichnet sich dadurch aus, dass eine jeweilige Verdampfertrommel einer höheren Druckstufe über eine Wasserleitung mit einer Verdampfertrommel einer jeweiligen niedrigeren Druckstufe in Verbindung steht.

Ein einen Trommel-Abhitzekessel enthaltendes Dampfsystem zur Durchführung des Verfahrens zeichnet sich dadurch aus, dass aus einem jeweiligen Behältnis einer höheren Druckstufe des Abhitzekessels oder der weiteren Komponenten des Dampfsystems das Medium, in der Regel Wasser, als Wärmeträger zu einem jeweiligen Behältnis einer niedrigeren Druckstufe der weiteren Komponenten des Dampfsystems zum Beheizen derselben und deren Inhalts überführt wird.

Ein Kombikraftwerk mit einem solchen Dampfsystem ist gekennzeichnet durch eine Gasturbogruppe, mittels deren Abgas der Abhitzekessel beheizt ist, und durch eine Dampfturbogruppe, welcher der im Abhitzekessel erzeugte Dampf zugeführt wird.

Dadurch, dass beim Anfahren des Dampfsystems keine Wärme durch Kühlung aus dem System abgeführt wird und das umlaufende Medium bereits vor der Verdampfung, d.h. im flüssigen Zustand als Wärmeträger genutzt wird, kann die Anfahrzeit des Dampfsystems und damit die Zeitspanne bis zur Verfügbarkeit beispielsweise einer Dampfturbine erheblich verkürzt werden.

Als Behältnis einer höheren Druckstufe des Dampfsystems ist eine Trommel zu verstehen, jedoch auch ein Economizer, ein Verdampfer oder ein Überhitzer. Als Behältnis einer niedrigeren Druckstufe sind neben den oben angeführten Einheiten, die dann bei einer niedrigeren Druckstufe arbeiten, auch ein Speisewasserbehälter/ Entgaser oder ein Kondensator/Hotwell zu verstehen.

Unter Medium ist je nach Aggregatzustand allgemein eine Flüssigkeit bzw. der entsprechende Dampf zu verstehen.

Im Falle eines Abhitzekessels bzw. Dampfkraftwerkes wird wohl allgemein von Wasser und Dampf gesprochen. Jedoch werden üblicherweise dem Wasser noch Zusätze zugegeben, so dass das Medium nicht als chemisch reines Wasser bezeichnet werden kann, sondern als aus hauptsächlich Wasser bestehend.

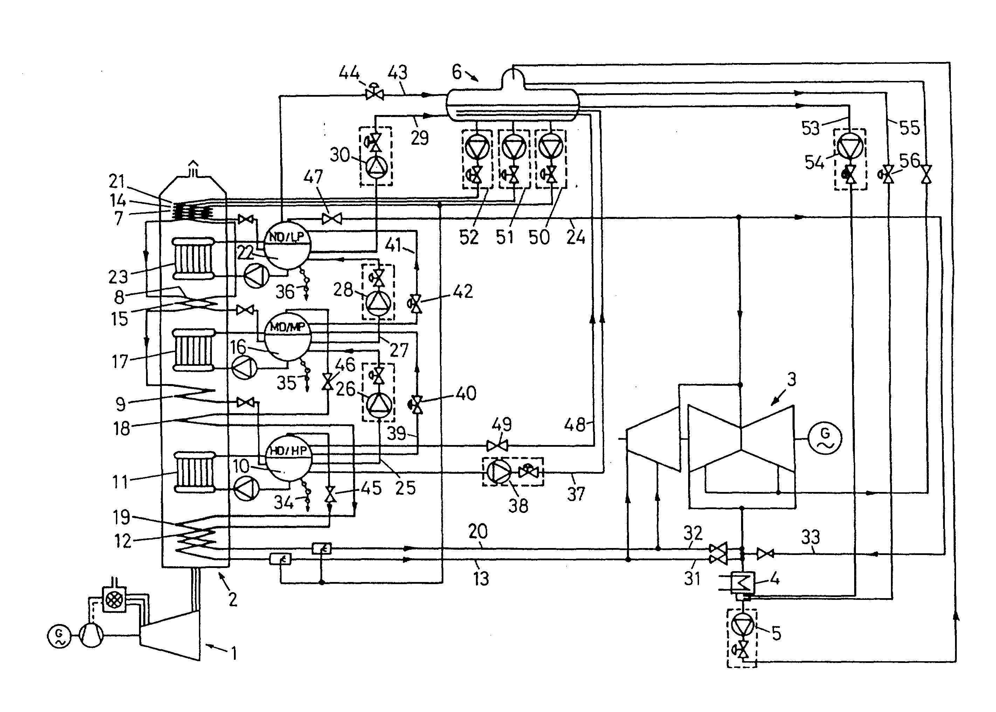

### Kurze Beschreibung der Zeichnung

Als Ausführungsbeispiel der Erfindung ist ein Kombikraftwerk gewählt worden. In der Zeichnung ist das Kombikraftwerk und insbesondere der Wasser-/Dampfkreislauf desselben dargestellt soweit es für das Verständnis der Erfindung notwendig ist.

### Wege zur Ausführung der Erfindung

Das Kombikraftwerk weist gemäss der einzigen Figur eine Gasturbogruppe 1 auf, deren Abgas einem Abhitzekessel 2 zugeführt wird. Der im Abhitzekessel 2 in mehreren Druckstufen erzeugte Dampf wird einer Dampfturbogruppe 3 zugeführt. Der Abdampf der Dampfturbogruppe 3 strömt in einen Kondensator/Hotwell 4, dem in bekannter Weise eine Kondensatpumpeneinheit 5 folgt. Das Kondensat wird von der Kondensatpumpeneinheit 5 zum Speisewasserbehälter/Entgaser 6 gefördert.

Zur Durchführung des im weiteren beschriebenen Verfahrens verfügt der Kondensator/Hotwell 4 im Kondensatsammelbehälter bzw. Hotwell über Einrichtungen zum Aufwärmen bzw. Aufkochen des Kondensates durch Einleitung von Heisswasser, im Idealfall Sattwasser und/oder Dampf zum Zwecke der Entgasung. Man bezeichnet dieses Verfahren daher auch als Hotwellentgasung.

Auch der Speisewasserbehälter besitzt neben dem als Domaufsatz dargestellten Rieselentgaser zur Entgasung des im Betrieb über die Kondensatpumpeneinheit zum Speisewasserbehälter/Entgaser 6 geförderten Kondensates über derartige Einrichtungen im Wasserbereich speziell zum Zwecke eines schnellen Anfahrens der Anlage.

In beiden Fällen werden die durch das Aufkochen des Inhaltswassers ausgetriebenen Gase bzw. Luft durch entsprechende jedoch nicht dargestellte Luftabsaugeinrichtungen abgeführt.

Bei Pumpen wird von Pumpeneinheiten gesprochen, d.h. das zur jeweiligen Pumpe gehörende Regelventil ist in der Bezeichnung Pumpeneinheit eingeschlossen.

Vom Speisewasserbehälter/Entgaser 6 wird mittels der Hochdruck(HD)speisewasserpumpeneinheit 50 Speisewasser zu einem Hochdruckeconomizer I 7 gefördert, strömt danach zum Hochdruckeconomizer II 8, zum Hochdruckeconomizer III 9 und von diesem zur Hochdruckdampftrommel 10. Die Hochdruckdampftrommel 10 steht mit dem Hochdruckverdampfer 11 in Verbindung. Weiter folgt der Hochdruckdampftrommel 10 ein Hochdrucküberhitzer 12, an welchem die Hochdruck-Frischdampfleitung 13 anschliesst, die zur Dampfturbogruppe 3 führt.

Weiter wird vom Speisewasserbehälter/Entgaser 6 mittels der Mitteldruck (MD)-Speisewasserpumpeneinheit 51 Speisewasser zu einem Mitteldruckeconomizer I 14 gefördert, strömt danach zum Mitteldruckeconomizer II 15, und von diesem in die Mitteldruckdampftrommel 16. Die Mitteldruckdampftrommel 16 steht mit dem Mitteldruckverdampfer 17 in Verbindung. Weiter folgt der Mitteldruckdampftrommel 16 ein Mitteldrucküberhitzer I 18 und ein Mitteldrucküberhitzer II 19, an welchem die Mitteldruck-Frischdampfleitung 20 anschliesst, die ebenfalls zur Dampfturbogruppe 3 führt.

Vom Speisewasserbehälter/Entgaser 6 wird mittels der Niederdruck(ND)-Speisewasserpumpeneinheit 52 weiter Speisewasser zu einem Niederdruckeconomizer 21 gefördert und strömt von diesem in die Niederdruckdampftrommel 22. Die Niederdruckdampftrommel 22 steht mit dem Niederdruckverdampfer 23 in Verbindung. An der Niederdruckdampftrommel 22 schliesst die Niederdruck-Frischdampfleitung 24 an, die ebenfalls zur Dampfturbogruppe 3 führt.

Der Hochdruckeconomizer I 7, der Hochdruckeconomizer II 8, der Hochdruckeconomizer III 9, die Hochdruckdampftrommel 10, der Hochdruckverdampfer 11 und der Hochdrucküberhitzer 12 bilden zusammen ein bei einer ersten Druckstufe des Dampfsystems arbeitendes Hochdrucksystem. Jede dieser Baueinheiten ist ein Behältnis für das umlaufende Medium, welches zum Teil als Flüssigkeit, also bei dieser Ausführung als Wasser, und weiter zum Teil als Dampf vorliegt. Als Behältnis ist somit ein Rohrbündel oder ein Behälter, z.B. eine Trommel zu verstehen.

Der Mitteldruckeconomizer I 14, der Mitteldruckeconomizer II 15, die Mitteldruckdampftrommel 16, der Mitteldruckverdampfer 17, der Mitteldrucküberhitzer I 18 und der Mitteldrucküberhitzer II 19 bilden zusammen ein bei einer zweiten Druckstufe des Dampfsystems arbeitendes Mitteldrucksystem, das wie oben beschrieben verschiedene Behältnisse umfasst.

Der Niederdruckeconomizer 21, die Niederdruckdampftrommel 22 und der Niederdruckverdampfer 23 bilden zusammen ein bei einer dritten Druckstufe des Dampfsystems arbeitendes Niederdrucksystem, wieder mit den verschiedenen Behältnissen.

Zum Dampfsystem gehört neben den beschriebenen drei unterschiedlichen Drucksystemen des Abhitzekessels der Speisewasserbehälter/Entgaser 6, der bei einer vierten Druckstufe des Dampfsystems arbeitet sowie der bei einer fünften Druckstufe arbeitende Kondensator/Hotwell 4.

Der Aufbau des beschriebenen Abhitzekessels 2 sowie des gesamten Dampfsystems ist lediglich als ein Beispiel zu betrachten, da wie allgemein bekannt ist, derartige Komponenten bzw. Systeme sehr unterschiedlich ausgebildet sein können. Für den Erfindungsgedanken ist lediglich wesentlich, dass mehrere (mindestens zwei) unterschiedliche Druckstufen vorhanden sind.

Von der Hochdruckdampftrommel 10 verläuft nun eine erste Wasserleitung 25 zur Mitteldruckdampftrommel 16. Die Förderung des Wassers bei diesem Ausführungsbeispiel erfolgt durch eine erste Pumpeneinheit 26. Von der Mitteldruckdampftrommel 16 verläuft eine zweite Wasserleitung 27 mit einer zweiten Pumpeneinheit 28 zur Niederdruckdampftrommel 22. Von der Niederdruckdampftrommel 22 führt eine dritte Wasserleitung 29 mit einer dritten Pumpeneinheit 30 zum Speisewasserbehälter/Entgaser 6. Vom Speisewasserbehälter/Entgaser führt schliesslich eine fünfte Wasserleitung 53 mit einer fünften Pumpeneinheit 54 zum Kondensator/Hotwell 4.

Die Förderung des Wassers erfolgt im Ausführungsbeispiel jeweils über eine Pumpe, kann jedoch auch über eine Höhendifferenz, eine Druckdifferenz oder eine Kombination dieser Möglichkeiten herbeigeführt werden.

Die Figur zeigt weiter ein Bypass-System, von welchen drei Bypass-Leitungen 31, 32, 33 gezeigt sind. Erfindungsgemäss wird das Bypass-System beim Anfahren des Kraftwerkes nicht mehr in bisheriger Weise gebraucht, wie noch beschrieben sein wird.

Die oben beschriebene Verbindung zwischen den verschiedenen Drucksystemen durch die Wasserleitungen 25, 27, 29 und 53 bildet nun eine erste Ausführung der Erfindung.

Nach dem Anfahren der Gasturbogruppe 1 erfolgt vorerst eine Erwärmung der Bauteile und des Wassers am Eintritt der Abgase in den Abhitzekessel, insbesondere in der Hochdruckdampftrommel 10 über die Hochdruckverdampfer 11-Heizflächen. Die Bezugsziffer 34 bezeichnet deren Abschlämmleitung. Das unterkühlte, bestenfalls thermisch gesättigte Wasser (Sattwasser) in der Hochdrucktrommel 10 wird als Wärmeträger durch die erste Wasserleitung 25 mit der ersten Pumpeneinheit 26 der Mitteldruckdampftrommel 16 mit dem niedrigeren Druck zugeführt. Die Bezugsziffer 35 bezeichnet deren Abschlämmleitung. Weiter wird das nun ebenfalls erwärmte Wasser der Mitteldruckdampftrommel 16 durch die zweite Wasserleitung 27 mit der zweiten Pumpeneinheit 28 der Niederdruckdampftrommel 22 zugeführt. Ihre Abschlämmleitung ist mit der Bezugsziffer 36 bezeichnet. Das Wasser der Niederdruckdampftrommel 22 wird durch die dritte Wasserleitung 29 mit der dritten Pumpeneinheit 30 in den Speisewasserbehälter/Entgaser 6 gefördert. Vom Speisewasserbehälter/Entgaser 6 strömt dann das Wasser über die entsprechenden Speisewasserpumpen durch die oben beschriebenen, verschiedenen Economizer zu den Dampftrommeln 10, 16, 22 zurück, um den Kreislauf erneut zu beginnen.

Es ist somit ersichtlich, dass die gesamte Wärme im Bereich des Kessels bzw. des Dampfsystems bleibt. Es wird keine Wärme als Verlust abgeführt. Ferner ist eine nahezu gleichzeitige Dampferzeugung in allen Druckstufen möglich und im gesamten System, vom Speisewasserbehälter/Entgaser bis zur Hochdruckdampftrommel kommt es sehr schnell zum Druckaufbau. Folglich beginnt auch die Entgasung im Speisewasserbehälter/Entgaser in kürzester Zeit nach dem Anfahren der Gasturbogruppe. Damit kann man schliesslich die Anfahrzeit für das gesamte Kraftwerk erheblich verkürzen.

Als weitere Variante, die zusätzlich oder alternativ zur oben beschriebenen Ausführung vorgesehen ist, ist die Hochdruckdampftrommel 10 über eine vierte Wasserleitung 37 mit einer vierten Pumpeneinheit 38 direkt mit dem Speisewasserbehälter/Entgaser 6 verbunden. Das heisst, dass die Entgasung im Speisewasserbehälter/Entgaser noch früher einsetzen kann.

Gemäss einer noch weiteren Ausführung der Erfindung führt von der Hochdruckdampftrommel 10 zusätzlich eine erste Dampfleitung 39 mit einem ersten Ventil 40 zur Mitteldruckdampftrommel 16. Von der Mitteldruckdampftrommel 16 führt eine zweite Dampfleitung 41 mit einem zweiten Ventil 42 zu der Niederdruckdampftrommel 22. Von der Niederdruckdampftrommel 22 führt eine dritte Dampfleitung 43 mit einem dritten Ventil 44 zum Speisewasserbehälter/ Entgaser 6. Vom Speisewasserbehälter/Entgaser führt schliesslich eine fünfte Dampfleitung 55 mit einem fünften Ventil 56 zum Kondensator/Hotwell 4.

Die Strömung des Dampfes erfolgt im vorliegenden Fall durch die Druckdifferenz zwischen den jeweiligen Behältnissen.

In der die Hochdrucktrommel 10 mit dem Hochdrucküberhitzer 12 verbindenden Dampfleitung ist ein Absperrventil 45 angeordnet. Ein weiteres Absperrventil 46 ist in der die Mitteldrucktrommel 16 mit dem Mitteldrucküberhitzer I 18 verbindenden Dampfleitung angeordnet, und schliesslich ist auch ein Absperrventil 47 in der Niederdruck-Frischdampfleitung 24 angeordnet.

Während dem Anfahren gemäss dieser weiteren Ausführung sind die Absperrventile 45, 46, 47 geschlossen und die Ventile 40, 42, 44 in den betreffenden Dampfleitungen offen. Damit erfolgt unmittelbar nach mindestens der Erzeugung von Dampf in der Hochdruckdampftrommel 10 ein Umlaufen von Dampf, analog zum beschriebenen Umlaufen von Wasser, wobei die Wärme wieder im Dampfsystem insbesondere in der Dampfphase verbleibt. Die Entgasung im Speisewasserbehälter/Entgaser kann wieder früher beginnen. Damit kann man letztlich sehr schnell die Bedingungen für ein Anfahren der Dampfturbine der Dampfturbogruppe erfüllen.

Analog zur betreffenden Variante der Wasserrückführung ist gemäss einer modifizierten Ausführung die Hochdruckdampftrommel 10 über eine vierte Dampfleitung 48 mit einem vierten Ventil 49 direkt mit dem Speisewasserbehälter/Entgaser 6 verbunden. Dadurch, dass beim Anfahren Dampf vom Hochdrucksystem des Abhitzekessels, d.h. von der Hochdruckdampftrommel 10 unmittelbar dem Speisewasserbehälter/Entgaser 6 zugeführt wird, beginnt die Entgasung im Speisewasserbehälter/Entgaser 6 zum frühestmöglichen Zeitpunkt des Anfahrens des Dampfsystems, was wiederum die Realisierung einer sehr kurzen Anfahrzeit für die Gesamtanlage ermöglicht.

Um ein schnelles Anfahren eines Dampfsystems zu erreichen müssen alle Komponenten des Wasser-/Dampfkreislaufs einschliesslich deren Parameter und Betriebskonzepte berücksichtigt werden. Zunächst bedeutet dies, dass jede dem Wasser-/Dampfkreislauf zugeordnete Komponente beim Anfahren des Systems insbesondere einem Kaltstart möglichst frühzeitig und solange mit Wasser bzw. Dampf zu Aufheizzwecken versorgt wird, bis deren Druck und/oder Temperatur den Mindestanforderungen für den Betrieb dieser Komponente selbst bzw. davon abhängiger Hilfsanlagen (z.B. Sperrdampfsystem, Luftabsaugung) genügt.

Benötigt beispielsweise eine Komponente für den Betrieb Dampf mit gewissen minimalen Werten von Druck und/oder Temperatur, zu welchem Zweck beim Dauerbetrieb z.B. Dampf aus einem Behältnis einer niedrigeren Druckstufe entnommen wird, steht dieser Dampf während einer ersten Zeitspanne des Anfahrens nicht zur Verfügung. Somit kann diese Komponente zunächst nicht angefahren werden.

Gemäss einer Ausführung der Erfindung wird nun dieser Dampf mit den benötigten Werten vorerst indirekt durch Kaskadierung einem Behältnis einer höheren Druckstufe entnommen, weil in diesem Behältnis viel früher als beim Behältnis der tieferen Druckstufe dieser Dampf zur Verfügung steht. Damit kann die betreffende Komponente frühzeitig mit Dampf entsprechender Parameter versorgt werden und damit zu einer Verkürzung der Anfahrzeit beitragen.

Bedindung für das Überführen des Mediums von einem Behältnis einer höheren Druckstufe zu einem Behältnis einer niedrigeren Druckstufe sind höhere Parameter von Druck und/oder Temperatur im Behältnis der höheren Druckstufe. Sinnvoller Weise wird das Überführen des Mediums von einem Behältnis einer höheren Druckstufe zu einem Behältnis einer niedrigeren Druckstufe erst dann beginnen, wenn die Druck- und/oder Temperaturwerte im Behältnis der höheren Druckstufe den genannten minimalen Anforderungen für den Betrieb des Behältnis der niedrigeren Druckstufe genügen. Mit dieser Ausführung ist somit ein paralleles Anfahren mehrerer Komponenten möglich.

Bei einem Behältnis einer niedrigeren Druckstufe, von welchem Behältnis irgendwelche dem Dampfsystem zugeordnete Komponenten einer Anlage mit Wasser und/oder Dampf versorgt werden, muss beachtet werden, dass nicht durch ein zu frühes Beenden des Überführens von Dampf und/oder Wasser aus einem Behältnis einer höheren Druckstufe die Minimalwerte nicht erreicht bzw. wieder unterschritten werden. Folglich wird gemäss dieser Ausführung das Überführen von Wasser und/oder Dampf frühestens dann beendet, wenn der Zustand von Druck und/oder Temperatur im Behältnis der niedrigeren Druckstufe dauerhaft und stabil den minimalen Anforderungen des Betriebes genügt.

Ein weiterer in einem Dampfsystem zu beachtender Zustand ist die Wasser- bzw. Dampfqualität. Gemäss einer diesbezüglichen Ausführung ist das Steuern der Überführung von Wasser und/oder Dampf abhängig von der Wasser- bzw. Dampfqualität. Um auch hier ein möglichst schnelles Anfahren durchzuführen, beginnt das Überführen des Mediums aus einem jeweiligen Behältnis einer höheren Druckstufe zu einem jeweiligen Behältnis einer niedrigeren Druckstufe spätestens dann, wenn die Wasser- bzw. Dampfqualität im Behältnis der höheren Druckstufe den Anforderungen des Dampfsystems entspricht. Das heisst, dass zum Beschleunigen des Anfahrens wieder Vorgänge parallel zueinander verlaufen, d.h. hier die Erwärmung und die Sicherstellung der Wasser- bzw. Dampfqualität.

Auch die Entgasung des Mediums sollte so früh als möglich erfolgen. Bekanntlich hängt das Einsetzen der Entgasung vor allem von Druck und Temperatur in einem gegebenen Behältnis ab. Somit ist wieder das Behältnis der höchsten Druckstufe zu beachten. Folglich wird gemäss einer weiteren Ausführung das Überführen des Mediums zwischen Behältnissen derart gesteuert, dass die Entgasung möglichst früh einsetzt. Demgemäss wird das Medium in einem Kreislauf so lange zum Behältnis der höchsten Druckstufe zurückgeführt, bei welchem Behältnis die jeweils höchste Temperatur vorherrscht, bis in einem weiteren Behältnis die Entgasung des Mediums infolge Wasser- bzw. Dampfrückführung einsetzt. Diese Ausführung kann beispielsweise durch die gezeigte direkte Verbindung zwischen der Hochdrucktrommel 10 und dem Speisewasserbehälter/Entgaser 6 oder dem Kondensator/Hotwell 4 verwirklicht werden.

Man findet heute in der Kraftwerkstechnik je nach Anlagenkonzept Wasser/Dampf-Kreisläufe mit oder ohne Speisewasserbehälter/Entgaser.

Bei Vorhandensein eines Speisewasserbehälters/Entgasers übernimmt dieser die Funktion der Bevorratung und Entgasung des Speisewassers. Im Falle des Nichtvorhandenseins eines Speisewasserbehälters/Entgasers kann man diese beiden Funktionen einzeln oder separat auch dem Kondensator/Hotwell oder der Niederdrucktrommel eines Abhitzekessels zuordnen.

Da man alle drei Komponenten zusätzlich mit Aufkochstufen ausrüsten kann, bietet das beschriebene System bzw. Verfahren eine Vielzahl von Möglichkeiten für die Anlagengestaltung und die entsprechenden Betriebskonzepte mit dem Ziel geringster Investitionen und höchster Flexibilität.

Da nach dem vorliegenden Erfindungsgedanken insbesondere bei einem Kaltstart die über ein Abgas in das Dampfsystem eingetragene Wärme zur Aufheizung der vorhandenen Behältnisse und deren Inhalte, zur Verdampfung des Wärmeträgers und damit zum Druckaufbau in den Systemen sowie zur Entgasung des Wärmeträgers eingesetzt wird, kommen die Bypässe 31,32,33 zunächst nicht in gewohnter Weise zum Einsatz. Erst in einer späteren Phase beispielsweise eines Kaltstarts bei Nichterfüllung der Anfahrbedingungen der Dampfturbine, infolge eingeschränkter thermischer Flexibilität weiterer Komponenten, bei einem Startabbruch und dergleichen kann sich ein Bypassbetrieb erforderlich machen. Die Bypässe erhalten ferner ihre Funktion z.B. für den Dampfturbinenschnellschluss aber auch für das Abfahren des Systems.

### Bezugszeichenliste

- 1: Gasturbogruppe
- 2: Abhitzekessel
- 3: Dampfturbogruppe
- 4: Kondensator/Hotwell (mit Aufkochstufe)
- 5: Kondensatpumpeneinheit
- 6: Speisewasserbehälter (mit Aufkochstufe) /Entgaser
- 7: Hochdruck(HD)-Economizer I
- 8: Hochdruck(HD)-Economizer II
- 9: Hochdruck(HD)-Economizer III
- 10: Hochdruck(HD)-Dampftrommel
- 11: Hochdruck(HD)-Verdampfer
- 12: Hochdruck(HD)-Überhitzer
- 13: Hochdruck(HD)-Frischdampfleitung
- 14: Mitteldruck(MD)-Economizer I
- 15: Mitteldruck(MD)-Economizer II
- 16: Mitteldruck(MD)-Dampftrommel
- 17: Mitteldruck(MD)-Verdampfer
- 18: Mitteldruck(MD)-Überhitzer I
- 19: Mitteldruck(MD)-Überhitzer II
- 20: Mitteldruck(MD)-Frischdampfleitung
- 21: Niederdruck(ND)-Economizer
- 22: Niederdruck(ND)-Dampftrommel
- 23: Niederdruck(ND)-Verdampfer
- 24: Niederdruck(ND)-Frischdampfleitung
- 25: erste Wasserleitung
- 26: erste Pumpeneinheit
- 27: zweite Wasserleitung
- 28: zweite Pumpeneinheit
- 29: dritte Wasserleitung
- 30: dritte Pumpeneinheit
- 31: Bypass-Leitung
- 32: Bypass-Leitung
- 33: Bypass-Leitung
- 34: Abschlämmleitung
- 35: Abschlämmleitung
- 36: Abschlämmleitung
- 37: vierte Wasserleitung
- 38: vierte Pumpeneinheit
- 39: erste Dampfleitung
- 40: erstes Ventil
- 41: zweite Dampfleitung
- 42: zweites Ventil
- 43: dritte Dampfleitung
- 44: drittes Ventil
- 45: Absperrventil
- 46: Absperrventil
- 47: Absperrventil
- 48: vierte Dampfleitung
- 49: viertes Ventil
- 50: Hochdruck(HD)-Speisewasserpumpeneinheit
- 51: Mitteldruck(MD)-Speisewasserpumpeneinheit
- 52: Niederdruck(ND)-Speisewasserpumpeneinheit
- 53: fünfte Wasserleitung
- 54: fünfte Pumpeneinheit
- 55: fünfte Dampfleitung
- 56: fünftes Ventil

## Patentansprüche

1. Verfahren zum Anfahren eines Dampfsystems mit mindestens zwei unterschiedlichen Druckstufen, wobei auf jeder Druckstufe mindestens ein Behältnis zur Aufnahme eines im System umlaufenden Mediums angeordnet ist, dadurch gekennzeichnet, dass aus einem jeweiligen Behältnis einer höheren Druckstufe das Medium als Wärmeträger zu einem jeweiligen Behältnis einer niedrigeren Druckstufe zum Beheizen derselben und dessen Inhalts überführt wird.

2. Verfahren nach Anspruch 1, dadurch gekennzeichnet, dass das Medium eines Behältnisses einer höheren Druckstufe einem Behältnis der nächst niedrigeren Druckstufe überführt wird.

3. Verfahren nach Anspruch 1 oder 2, dadurch gekennzeichnet, dass das Medium eines Behältnisses einer höheren Druckstufe mindestens ein Behältnis niedrigerer Druckstufe überspringend einem Behältnis einer niedrigeren Druckstufe überführt wird.

4. Verfahren nach einem der vorangehenden Ansprüche, dadurch gekennzeichnet, dass das Überführen des Mediums durch ein Pumpen, durch eine geodätische Höhendifferenz, durch eine vorherrschende Druckdifferenz zwischen den Behältnissen oder eine Kombination dieser Möglichkeiten erfolgt.

5. Verfahren nach einem der vorangehenden Ansprüche, dadurch gekennzeichnet, dass das Medium in Form von hauptsächlich Wasser und/oder Dampf vorliegt.

6. Verfahren nach einem der vorangehenden Ansprüche, dadurch gekennzeichnet, dass das Medium in Form von hauptsächlich Wasser in einem unterkühlten oder gesättigten Zustand vorliegt.

7. Verfahren nach einem der vorangehenden Ansprüche, dadurch gekennzeichnet, dass während dem Anfahren das Medium in einem flüssigen Zustand und nach dem Einsetzen dessen Verdampfens sowohl in einem flüssigen als auch in einem dampfförmigen Zustand als Wärmeträger eingesetzt wird.

8. Verfahren nach einem der vorangehenden Ansprüche, dadurch gekennzeichnet, dass das Medium im flüssigen Zustand in einem Behältnis einer beliebigen Druckstufe entgast wird.

9. Verfahren nach einem der vorangehenden Ansprüche, dadurch gekennzeichnet, dass das Medium im flüssigen Zustand im Behältnis vor der niedrigsten Druckstufe entgast wird.

10. Verfahren nach einem der vorangehenden Ansprüche, dadurch gekennzeichnet, dass das Medium im flüssigen Zustand im Behältnis der niedrigsten Druckstufe entgast wird.

11. Verfahren nach einem der vorangehenden Ansprüche, bei welchem dem Dampfsystem ein Kondensator/Hotwell zugeordnet ist, dadurch gekennzeichnet, dass das im Kondensator/Hotwell befindliche Kondensat durch Überführung des Mediums einer höheren Druckstufe entgast wird.

12. Verfahren nach einem der vorangehenden Ansprüche, bei welchem dem Dampfsystem ein Speisewasserbehälter/Entgaser zugeordnet ist, dadurch gekennzeichnet, dass das im Speisewasserbehälter/Entgaser befindliche Speisewasser durch Überführung des Mediums einer höheren Druckstufe entgast wird.

13. Verfahren nach einem der vorangehenden Ansprüche, bei welchem dem Dampfsystem eine Verdampfertrommel zugeordnet ist, dadurch gekennzeichnet, dass das in einer Verdampfertrommel befindliche Trommelwasser durch Überführung des Mediums einer höheren Druckstufe entgast wird.

14. Verfahren nach einem der vorangehenden Ansprüche, dadurch gekennzeichnet, dass das Überführen des Mediums aus einem jeweiligen Behältnis einer höheren Druckstufe zu einem jeweiligen Behältnis einer niedrigeren Druckstufe frühestens dann beginnt, wenn der Zustand von Druck und/oder Temperatur im Behältnis der höheren Druckstufe den minimalen Anforderungen für den Betrieb des Behältnisses der niedrigeren Druckstufe genügt.

15. Verfahren nach einem der vorangehenden Ansprüche, dadurch gekennzeichnet, dass das Überführen des Mediums aus einem jeweiligen Behältnis einer höheren Druckstufe zu einem jeweiligen Behältnis einer niedrigeren Druckstufe frühestens dann beendet wird, wenn der Zustand von Druck und/oder Temperatur im Behältnis der niedrigeren Druckstufe den minimalen Anforderungen für den Betrieb genügt.

16. Verfahren nach einem der vorangehenden Ansprüche, dadurch gekennzeichnet, dass das Überführen des Mediums aus einem jeweiligen Behältnis einer höheren Druckstufe zu einem jeweiligen Behältnis einer niedrigeren Druckstufe spätestens dann beginnt, wenn die Wasser- bzw. Dampfqualität im Behältnis der höheren Druckstufe den Anforderungen des Dampfsystems entspricht.

17. Verfahren nach einem der vorangehenden Ansprüche, dadurch gekennzeichnet, dass das Medium im System so lange zum Behältnis der höchsten Druckstufe zurückgeführt wird, bis in einem weiteren Behältnis die Entgasung des Mediums einsetzt.

18. Dampfsystem zur Durchführung des Verfahrens nach einem der vorangehenden Ansprüche, dadurch gekennzeichnet, dass ein jeweiliges Behältnis einer höheren Druckstufe mit einem Behältnis einer niedrigeren Druckstufe in Verbindung steht.

19. Dampfsystem nach Anspruch 18, dadurch gekennzeichnet, dass mindestes ein Behältnis einer niedrigeren Druckstufe des Systems als Speisewasserbehälter/ Entgaser (6) und/oder Kondensator/Hotwell (4) ausgebildet ist.

20. Dampfsystem nach Anspruch 18, dadurch gekennzeichnet, dass ein jeweiliges Behältnis einer höheren Druckstufe über eine absperrbare Wasser- und/oder absperrbare Dampfleitung mit einem Behältnis einer niedrigeren Druckstufe in Verbindung steht.

21. Ein einen Trommel-Abhitzekessel enthaltendes Dampfsystem zur Durchführung des Verfahrens nach einem der Ansprüche 1-17, bei welchem mindestens eine Anzahl Behältnisse (10; 16; 22; 4; 6) als Verdampfertrommeln (10; 16; 22) ausgebildet sind, dadurch gekennzeichnet, dass ein jeweiliges Behältnis einer höheren Druckstufe über eine absperrbare Wasserleitung (25; 27; 29; 37; 53) mit einer Verdampfertrommel (16; 22) oder einem weiteren Behältnis (4; 6) einer jeweiligen niedrigeren Druckstufe in Verbindung steht.

22. Ein einen Trommel-Abhitzekessel enthaltendes Dampfsystem zur Durchführung des Verfahrens nach einem der Ansprüche 1-17, bei welchem mindestens eine Anzahl Behältnisse (10; 16; 22; 4; 6) als Verdampfertrommeln (10; 16; 22) ausgebildet sind, dadurch gekennzeichnet, dass ein jeweiliges Behältnis einer höheren Druckstufe über eine absperrbare Dampfleitung (39; 41; 43; 48; 55) mit einer Verdampfertrommel (16; 22) oder einem weiteren Behältnis (4; 6) einer jeweiligen niedrigeren Druckstufe in Verbindung steht.

23. Kombikraftwerk mit einem Dampfsystem nach Anspruch 18, gekennzeichnet durch eine Gasturbogruppe (1), mittels deren Abgas der Abhitzekessel (2) beheizt ist,..und durch eine Dampfturbogruppe (3), welcher der im Abhitzekessel (2) erzeugte Dampf zugeführt wird.
